# EUROPÄISCHE PATENTANMELDUNG

(11) **EP 1 431 418 A1**
(43) Veröffentlichungstag der Anmeldung: **23.06.2004**
(21) Anmeldenummer: 02028477.4
(22) Anmeldetag: 19.12.2002
(51) Int. Cl.: C23F 1/44, C23F 1/12, A61C 13/00, A61C 5/10, C25D 1/00, A61C 13/02, A61C 5/08

(54) **Verfahren zum Entfernen silberhaltiger Leitmaterialien von galvanisch hergestellten Teilen**

(71) Anmelder: Wieland Dental + Technik GmbH & Co. KG, 75179 Pforzheim (DE)
(72) Erfinder: Rübel, Susanne, 76307 Karlsbad (DE); Günthner, Thomas, 75365 Calw (DE)
(74) Vertreter: Patentanwälte Ruff, Wilhelm, Beier, Dauster & Partner

(57) **Zusammenfassung**

Bei einem Verfahren zum Entfernen von silberhaltigen Leitmaterialien von galvanisch hergestellten Teilen, insbesondere von galvanisch hergestellten Dentalformteilen, wird das Teil/Formteil mit Iod und/oder mindestens einer iodhaltigen Verbindung in mindestens einem Verfahrensschritt behandelt. Das Iod und/oder die iodhaltige Verbindung liegen dabei vorzugsweise in Form einer Lösung oder einer Dispersion in mindestens einem polaren Lösungsmittel vor. Als iodhaltige Verbindung kommen insbesondere anorganische lodide und lodophore zum Einsatz.

## Beschreibung

Die Erfindung betrifft in erster Linie ein Verfahren zum Entfernen silberhaltiger Leitmaterialien wie Leitlacken von galvanisch hergestellten Teilen, insbesondere von galvanisch hergestellten Formteilen für den Dentalbereich.

Metallische Teile allgemein, insbesondere aber prothetische Formteile im Dentalbereich, werden heute standardmäßig auch mit Hilfe galvanischer Metallabscheidung hergestellt. Bei dem sogenannten Galvanoforming kommen hauptsächlich Edelmetalle wie z. B. Gold und Goldlegierungen zum Einsatz. Die so hergestellten Formkörper/Formteile können, insbesondere als sogenannte Dentalgerüste, auf die dann Keramik oder Kunststoff aufgebracht wird, für die bekannten zahnärztlichen und zahntechnischen Zwecke verwendet werden. Auch Formteile, die in der Doppelkronen- und Brückentechnik und als Suprakonstruktionen und dergleichen eingesetzt werden, werden auf galvanischem Weg hergestellt.

Unabhängig vom Verwendungszweck der galvanisch hergestellten Formteile/Formkörper wird die zu galvanisierende Fläche vor der galvanischen Abscheidung mit einem leitfähigen Material (Leitmaterial), meist Silber, versehen. Dabei werden üblicherweise sogenannte Leitsilberlacke verwendet. Letztere enthalten neben einer Lackkomponente Silberteilchen. Das Aufbringen der Leitsilberschicht kann auf verschiedene Art und Weise erfolgen, derzeit meist mit dem Pinsel, einem Faserstift (ähnlich einem Edding-Stift) oder durch Airbrush-Verfahren. Dabei dient die Leitschicht auf nicht-leitfähigen Trägermaterialien (z. B. Gips, Kunststoffe, Keramik) zur Herstellung der Leitfähigkeit der Oberfläche. Bei leitfähigen Trägermaterialien wie z. B. Metallen und Legierungen, dient sie als leitfähige Zwischenschicht, die die Trennung der galvanisch aufgebrachten Schicht von dem Trägermaterial ermöglicht. In beiden Fällen verbleibt die Leitsilberschicht nach der Trennung der galvanischen Schicht vom Trägermaterial zum größten Teil an der galvanischen Schicht.

Die restlose Entfernung dieser Leitsilberschicht von dem galvanisch hergestellten Teil/Formteil ist insbesondere im Dentalbereich für die Verwendung und die Funktionalität der auf diese Weise hergestellten Formkörper unumgänglich.

Gerade im Dentalbereich werden an galvanisch abgeschiedene Schichten nämlich besondere Anforderungen gestellt, die je nach Art des hergestellten Dentalgerüstes oder Formteils auch variieren können. Voraussetzung, um auf das Formteil anschließend eine Keramik- oder Kunststoffverblendung aufbringen zu können, ist z. B. ein homogener Schichtaufbau, eine möglichst einheitliche Schichtdicke und eine reproduzierbare Zusammensetzung der abgeschiedenen Schicht. Dies gilt insbesondere für Keramikverblendungen, wo das Formteil nach Aufbringen der Keramikmasse, zum Teil auch mehrfach, bei höheren Temperaturen gebrannt werden muß. Darüber hinaus muß das metallische Grundgerüst die notwendige Brennstabilität besitzen. In allen Fällen müssen auch bezüglich weiterer Eigenschaften, wie Verschleißfestigkeit, Porosität, Korrosionsbeständigkeit unter anderem Mindestanforderungen erfüllt sein. Für die Weiterverwendung sowie die Funktionalität der galvanisch hergestellten Formteile ist insbesondere hervorzuheben, daß die galvanische Schicht frei von Verunreinigungen jeglicher Art sein muß. Je nach Art und Menge der Verunreinigungen können verschiedene Verarbeitungsnachteile entstehen, bis hin zum völligen Versagen der Funktionalität des Formteils als prothetisches Dentalgerüst. So führen Verunreinigungen wie z. B. Fette oder Öle auf der keramisch zu verblendenden Oberfläche der Formteile ("Außenseiten") zur Blasenbildung in der Keramikschicht, und Verunreinigungen, die den Haftverbund zwischen galvanisch hergestellter Metallschicht und Verblendschicht beeinträchtigen, stellenweise oder großflächig zum Abplatzen der Verblendschicht. Wenn die Leitsilberschicht noch in Resten oder sogar komplett an der galvanischen Metallschicht des Formteils vorhanden ist, können neben Blasenbildung in der Verblendschicht sogar Deformationen der galvanisch abgeschiedenen Metallschicht auftreten.

Zusätzlich ist gerade im Dentalbereich für die Ästhetik und die Biokompatibilität der Materialien eine reproduzierbare hohe Reinheit der Materialien erforderlich. Beispielsweise sind für Allergiepatienten Gold- oder Goldlegierungsschichten mit möglichst hoher Reinheit gefordert. In diesem Zusammenhang ist Silber aus unvollständig oder gar nicht entfernten Leitsilberschichten an galvanisch hergestellten Dentalgerüsten nicht nur ein potentielles Allergierisiko, sondern es führt auch im Laufe der Zeit zu dunklen Verfärbungen der Gingiva (Zahnfleisch) im Kronenrandbereich.

Bei den kommerziell einsetzbaren Verfahren und Geräten für das Galvanoforming im Dentalbereich wird daher die Entfernung der Leitsilberlackschicht von der galvanisch abgeschiedenen Metallschicht üblicherweise mit Salpetersäure vorgenommen. In einigen Fällen, wenn an die Innenseite des Formteils, insbesondere einer Krone keine besonderen Anforderungen gestellt werden (wie z. B. bezüglich Glätte und spannungsfreiem Gleiten auf einer metallischen oder keramischen Primärkrone), ist es auch möglich, die Leitsilberlackschicht durch Sandstrahlen zu entfernen.

Da Silber als Edelmetall von wäßrigen Lösungen von Salzsäure oder anderen nicht oxidierenden Säuren nicht angegriffen wird, läßt es sich nur durch oxidierende Säuren (Salpetersäure, warme konz. Schwefelsäure) und Alkalicyanidlösungen auflösen. (Quelle: Römpp Lexikon Chemie-Version 2.0, Stuttgart/New York: Georg Thieme Verlag 1999.) Für die Entfernung einer Silberlackschicht von einem auf galvanischem Wege hergestellten Formteil, das als Dentalgerüst verwendet werden soll, sind an das Verfahren spezielle Anforderungen gestellt. So darf das Verfahren keinen negativen Einfluß auf das Formteil selbst haben. Damit sind einige dem Fachmann bekannte Möglichkeiten zur chemischen/elektrochemischen Auflösung von Silber hier nicht anwendbar, da sie auch die galvanische Metallschicht massiv angreifen und schädigen können. Vor allem für die überwiegend galvanisierten Gold- und Goldlegierungsschichten sind die anwendbaren Verfahren stark eingeschränkt. Zusätzlich muß ein solches Verfahren für Benutzer ohne ausgeprägtes chemisch-technisches Fachwissen wie Zahntechniker, Zahnärzte und deren Personal einfach und ohne größere Sicherheitsrisiken durchführbar sein.

Beide Methoden (chemisches Ablösen/Herauslösen bzw. Sandstrahlen) sind teilweise mit erheblichen Nachteilen behaftet. Salpetersäure wirkt stark ätzend auf Haut, Augen und Schleimhäute und verursacht schlecht heilende Wunden. Das Einatmen der Dämpfe und der üblicherweise darin gelösten nitrosen Gase kann zu Lungenentzündung und Verätzung der Lungenbläschen führen. Bei der Verwendung der Salpetersäure (üblicherweise 25-35 %ig) ist die beste Wirksamkeit und absolut sicheres Herauslösen des Silberlackes nur gegeben, wenn die galvanisch hergestellten Formteile in der Säure ausgekocht werden. Da bei diesem Verfahren ein Säureabzug unumgänglich ist, kann diese Methode in nur wenigen Fällen eingesetzt werden. Wird die Salpetersäure nicht gekocht, sondern mit dem Formteil in einem fest verschlossenen Kunststoffgefäß im Ultraschallbad verwendet, so verlängert sich die Zeit zum Herauslösen der Leitsilberschicht erheblich und die Sicherheit des restlosen Entfernens auch kleinster Silberreste ist nicht gegeben. Außerdem ist in einigen Ländern aufgrund strenger Transport- und Handhabungsrichtlinien der Erwerb und Transport von Salpetersäure für ungeschultes Personal verboten (z. B. USA).

Das Herausstrahlen der Leitsilberiackschicht durch Sandstrahlen ist ebenfalls mit Risiken behaftet und nicht immer möglich. Bei zu hohem Strahldruck, falscher Korngröße oder falschem Strahlmaterial kann es zu Deformationen des galvanisch hergestellten Metallformteiles kommen. Teilweise kann auch bei falscher Anwendung des Strahlens das Silber nicht herausgelöst, sondern in die Metallschicht eingestrahlt werden.

Die Erfindung stellt sich deshalb unter anderem die Aufgabe, ein Verfahren zur Entfernung silberhaltiger Leitmaterialien aus galvanisch hergestellten prothetischen Formteilen für den Dentalbereich zur Verfügung zu stellen, das die oben geschilderten Nachteile mindestens teilweise vermeidet. Insbesondere soll das Entfernen des Leitsilbers noch zuverlässiger und sicherer gemacht sowie die Handhabung des dazu verwendeten Verfahrens weiter vereinfacht werden. Darüber hinaus soll die Möglichkeit geschaffen werden, dem Anwender ein mit geringen Sicherheitsrisiken behaftetes Verfahren an die Hand zu geben. Schließlich sollen die bei dem Verfahren verwendeten Lösungen weitgehend aus physiologisch unbedenklichen Verbindungen bestehen, so daß sie keinen besonderen Transport- und Handelsbedingungen unterliegen.

Diese Aufgabe wird gelöst durch das Verfahren mit den Merkmalen des Anspruchs 1. Bevorzugte Ausführungen dieses Verfahrens sind in den abhängigen Ansprüchen 2 bis 15 dargestellt. Weiter umfaßt die Erfindung die in Anspruch 16 beanspruchte Verwendung von Iod oder einer iodhaltigen Verbindung sowie die in den Ansprüchen 17 bis 23 definierten Lösungen bzw. Dispersionen. Der Wortlaut sämtlicher Ansprüche wird hiermit durch Bezugnahme zum Inhalt dieser Beschreibung gemacht.

Das eingangs erwähnte Verfahren zeichnet sich erfindungsgemäß dadurch aus, daß das Teil/Formteil in mindestens einem Teilschritt des Verfahrens mit Iod und/oder mit mindestens einer iodhaltigen Verbindung behandelt wird. Dabei kann das Teil/Formteil grundsätzlich aus jedem beliebigen (galvanisch abscheidbaren) Material, vorzugsweise metallischem Material, bestehen. Hervorzuheben sind hier die eingangs diskutierten Fälle, bei denen das Teil/Formteil aus mindestens einem Edelmetall oder mindestens einer Edelmetallegierung besteht. Insbesondere kommt das erfindungsgemäße Verfahren bei Teilen/Formteilen zum Einsatz, bei denen Gold oder Goldlegierungen galvanisch abgeschieden werden.

Bei dem erfindungsgemäßen Verfahren liegen das Iod und/oder die iodhaltige Verbindung vorzugsweise in Lösung oder in Dispersion mit mindestens einem Lösungsmittel vor. Der Begriff Dispersion soll dabei in umfassendem Sinn verstanden werden und je nach verwendetem Agens (Iod/iodhaltige Verbindung) die Begriffe Suspension, Emulsion, kolloidale Lösung und dergleichen einschließen. Insbesondere in Abhängigkeit vom verwendeten Agens (Iod/Iodverbindung) können diese Lösungen bzw. Dispersionen geeignete, aus dem Stand der Technik bekannte Additive enthalten, die diese Lösungen/Dispersionen stabilisieren oder ihre physikalischen und chemischen Eigenschaften verbessern. Bei solchen Additiven kann es sich beispielsweise um Glycerin, Zitronensäure, Natriumhydroxid, Kaliumhydroxid und andere handeln.

Als Lösungsmittel können erfindungsgemäß alle dem Fachmann bekannten Lösungsmittel dienen, die für Iod bzw. die iodhaltigen Verbindungen geeignet sind. Hier sind neben Wasser auch organische Lösungsmittel oder deren Mischungen mit Wasser zu nennen. Als organische Lösungsmittel kommen zum einen sauerstoffreie Lösungsmittel wie Schwefelkohlenstoff, Benzol, Chloroform, Tetrachlormethan und dergleichen sowie zum anderen sauerstoffhaltige organische Lösungsmittel wie Ether, Aceton und Alkohole in Frage. Bei den Alkoholen sind insbesondere die Alkanole geeignet, wobei Ethanol besonders hervorzuheben ist.

Reines Iod und seine Eigenschaften sind hinlänglich bekannt, so daß die Herstellung entsprechender Lösungen/Dispersionen für den Fachmann keinerlei Schwierigkeit darstellt. Als iodhaltige Verbindungen kommen grundsätzlich alle dem Fachmann bekannten anorganischen oder organischen lodverbindungen in Frage. Vorzugsweise handelt es sich bei diesen iodhaltigen Verbindungen um Iodide, worunter bekanntlich alle anorganischen und organischen lodverbindungen zu verstehen sind, in denen Iod als der elektronegative Bestandteil auftritt. Von diesen Iodiden sind die anorganischen Iodide erfindungsgemäß bevorzugt, wobei die Salze Natriumiodid und Kaliumiodid besonders in Betracht kommen. Neben den Iodiden sind auch die Iodate, die lodoxide und weitere lodorganische Verbindungen zu nennen.

Weitere iodhaltige Verbindungen, die bei dem erfindungsgemäßen Verfahren bevorzugt verwendbar sind, sind die sogenannten lodophore. Unter lodophoren werden bekanntlich trägergebundene iodhaltige Materialien aus (Poly-)Carbonsäuren, Tensiden oder Polymeren, vorzugsweise Polyvinylpyrrolidon (PVP) verstanden, welche zwischen 0,5 % und mehreren Prozent Iod als sogenanntes aktives Iod komplex gebunden enthalten. Aufgrund der vergleichsweise festen Bindung des Iods haben diese lodophore einen schwächeren Iod-Geruch sowie eine geringere Korrosivität und Toxizität. lodophore werden in Desinfektionsmitteln und Antiseptika bereits seit längerem verwendet.

Bevorzugte lodophore, die nach dem erfindungsgemäßen Verfahren eingesetzt werden können, lassen sich unter dem Begriff Polyvidon-Iod zusammenfassen. Polyvidon ist der Name für Polyvinylpyrrolidonen unterschiedlicher Kettenlänge, die im Polyvidon-Iod in einem Komplex mit Iod vorliegen. Die lodgehalte betragen bis zu 12 % frei verfügbarem Iod. Als Lösungsmittel kommen insbesondere Alkohole und/oder Wasser zum Einsatz. Die Molmasse der eingesetzten Polyvinylpyrrolidone ist dabei nicht kritisch und kann im handelsüblichen Bereich zwischen 2.500 bis 750.000 g/mol liegen. Vorzugsweise werden dabei aber niedermolekulare ausscheidbare Polyvinylpyrrolidone mit Molmassen zwischen 2.500 und 25.000 g/mol verwendet.

Bei bevorzugten Ausführungsformen des erfindungsgemäßen Verfahrens wird das galvanisch hergestellte Teil/Formteil mit einer Lösung, die Iod und mindestens eine iodhaltige Verbindung enthält, behandelt. Dementsprechend enthält diese Lösung sowohl das Iod in gelöster Form, als auch mindestens eine lösliche lodverbindung. Bei dieser iodhaltigen Verbindung kann es sich zum einen vorzugsweise um eine anorganisches Iodid und/oder ein (anorganisches) Iodat handeln. Auch hier sind wiederum Natriumiodid und insbesondere Kaliumiodid als bevorzugte iodhaltige Verbindungen zu nennen. Zum anderen ist bei solchen Ausführungsformen die Verwendung einer Lösung bevorzugt, bei der als iodhaltige Verbindung Polyvidon-Iod eingesetzt wird.

Bei besonders bevorzugten Ausführungsformen der Erfindung wird das galvanisch hergestellte Teil/Formteil mit einer Lösung behandelt, die in Wasser und Ethanol Iod und Kaliumiodid enthält. Mit solchen Lösungen lassen sich die silberhaltigen Leitmaterialien besonders gut von den galvanisch hergestellten Teilen, insbesondere von solchen aus Gold oder Goldlegierungen entfernen. Solche Lösungen lassen sich auch besonders einfach als klare Lösungen herstellen, die eine braun-rote Farbe aufweist.

Bei besonders bevorzugten Ausführungsformen des erfindungsgemäßen Verfahrens sind die verwendeten Lösungen/Dispersionen im wesentlichen frei von physiologisch bedenklichen Bestandteilen und Additiven bzw. Zusätzen. Dies betrifft insbesondere diejenigen Ausführungsformen, bei denen Lösungen mit den Bestandteilen Iod und/oder anorganisches Iodid (insbesondere Kaliumiodid) in Wasser und/oder Alkohol eingesetzt werden.

Besonders hervorzuheben sind darüber hinaus Ausführungsformen, bei denen Iod und Kaliumiodid in wäßrigen bzw. alkoholischen Lösungen enthalten sind. Solche Lösungen lassen sich in verschiedenen Konzentrationen (Normalitäten) erfindungsgemäß einsetzen. lod-Kaliumiodid-Lösungen lösen das Iod zu Kaliumtriiodid, wobei bei höheren Konzentrationen Polyiodid-Anionen (l₃⁻ bis l₉⁻, insbesondere l₅⁻, l₇⁻ und l₉⁻) gebildet werden. Auf diese Weise wird wesentlich mehr Iod gelöst als seiner Löslichkeit entspricht. In diesen Polyiodiden ist das Iod so leicht gebunden, daß es bei chemischen Reaktionen aller Art leicht abgegeben wird. Daher verhalten sich solche Iod-Kaliumiodid-Lösungen in der Praxis wie echte, (hoch)konzentrierte Iod-Lösungen.

Bei der Erfindung ist es weiter bevorzugt, wenn die verwendete Dispersion oder insbesondere die verwendete Lösung die iodhaltige Verbindung in einer Konzentration von 0,05 mg/l bis hin zur Sättigungskonzentration enthält. Insbesondere sind Konzentrationen von 100 g/l bis 1,44 kg/l bevorzugt, wobei innerhalb dieses Bereiches Konzentrationen zwischen 500 g/l und 1 kg/l hervorzuheben sind. Die Konzentration an (zusätzlich) in der Dispersion oder vorzugsweise in der Lösung enthaltenem Iod ist ebenfalls nicht kritisch. Hervorzuheben sind hier lod-Konzentrationen von 0,05 mg/l und der Sättigungskonzentration (von Iod in einer Iod-Kaliumiodid-Lösung). Vorzugsweise kann die lodkonzentration von 0,5 g/l bis zu 20 g/l, insbesondere von 10 g/l bis zu 20 g/l betragen.

Die Behandlungsdauer des galvanisch hergestellten Teils/Formteils mit dem Iod und/oder der iodhaltigen Verbindung kann grundsätzlich, insbesondere in Abhängigkeit von dem zu behandelnden Teil/Formteil und dem verwendeten Agens, frei gewählt werden. In diesem Zusammenhang kann es von Vorteil sein, die Behandlung bei höheren Temperaturen, beispielsweise bis zu 50 °C durchzuführen. Alternativ oder zusätzlich kann die Behandlung durch die Anwendung von Ultraschall (beispielsweise in einem Ultraschallbad) unterstützt werden. Übliche Behandlungsdauern liegen dabei zwischen ca. 1 min und einigen Stunden, wobei Behandlungsdauern zwischen ca. 1 min und ca. 1 h hervorzuheben sind. Häufig werden die erfindungsgemäßen Vorteile bereits bei Behandlungsdauern zwischen ca. 1 min und ca. 10 min erreicht. So genügt z. B. eine Behandlungsdauer von max. 3 min im Ultraschallbad in einer Iod-Kaliumiodid-Lösung, die ca. 90 g Kaliumiodid und ca. 2 g Iod in 100 ml Wasser enthält, völlig aus, um das vor der galvanischen Abscheidung einer Goldschicht aufgetragene Leitsilber restlos zu entfernen. Wird unter gleichen Voraussetzungen lediglich ohne Ultraschallbad gearbeitet, verlängert sich die Behandlungsdauer lediglich auf ca. 6 bis 8 min.

Bei weiteren bevorzugten Ausführungsformen des erfindungsgemäßen Verfahrens werden Bereiche des galvanisch hergestellten Teils/Formteils, die kein silberhaltiges Leitmaterial aufweisen, vor Behandlung mit dem Iod und/oder der mindestens einen iodhaltigen Verbindung geschützt. Auf diese Weise soll ein unter Umständen nicht auszuschließender unnötiger Angriff der entsprechenden Oberflächen des Teils/Formteils vermieden werden. Vorzugsweise erfolgt der Schutz solcher Bereiche durch Aufbringen einer Schutzschicht, insbesondere eines Schutzlacks. Hierbei kann es sich um Lacke handeln, die auch unter den Stichworten Abziehlack, Folienlack und dergleichen bekannt sind. Vorzugsweise wird hierbei ein handelsüblicher selbsthärtender Schutzfilm auf Silikonbasis verwendet, wie er beispielsweise von der Firma Erkodent (Deutschland) unter der Bezeichnung Erkoskin angeboten wird. Ein solcher Schutzfilm kann nach Durchführung des Verfahrens einfach und mühelos restlos wieder abgezogen werden.

Es ist bei der Erfindung bevorzugt, wenn die Behandlung mit dem Iod und/oder der mindestens einen iodhaltigen Verbindung als einziger Verfahrensschritt zum Entfernen der silberhaltigen Leitmaterialien angewendet wird. Es ist jedoch auch möglich, dieses erfindungsgemäße Verfahren mit anderen Verfahrensschritten zu kombinieren, so daß die Behandlung mit Iod/iodhaltiger Verbindung nur einen Teilschritt der gesamten Behandlung darstellt. Als zusätzliche Verfahrensschritte können dabei die eingangs erwähnten Verfahren angewendet werden, also insbesondere die Behandlung mit oxidierenden Säuren und das Sandstrahlen. Die Reihenfolge der einzelnen Verfahrensschritte ist dabei nicht kritisch.

Das galvanisch hergestellte Formteil wird in dem Fachmann bekannter Art und Weise vom Trägermaterial getrennt. Dabei bleibt die galvanisch hergestellte Metallschicht auf einer Seite (im folgenden auch als Innenseite bezeichnet) mit dem anhaftenden Leitsilberlack zurück. Nach dem letzten Behandlungsschritt zum Entfernen des silberhaltigen Leitmaterials, insbesondere nach Abschluß der erfindungsgemäßen Behandlung mit Iod und/oder mindestens einer iodhaltigen Verbindung, kann das galvanisch hergestellte Teil/Formteil einer geeigneten Nachbehandlung unterzogen werden. Zu diesem Zweck werden die Teile/ Formteile, beispielsweise nach Entnahme aus der Behandlungslösung mit einem Lösungsmittel abgespült. Hierbei handelt es sich vorzugsweise um Wasser, insbesondere um fließendes Wasser. Sofern Bereiche des Teils/Formteils mit einer Schutzschicht oder einem Schutzlack versehen sind, so wird dieser anschließend entfernt und das Teil/Formteil anschließend nochmals mit Lösungsmittel, insbesondere Wasser, abgespült. Dann kann das Teil/Formteil innen und außen gründlich mit einem Wasserdampfstrahler abgedampft werden. Hierbei handelt es sich um einen gängigen Arbeitsschritt in der Zahntechnik, der der Entfernung von möglicherweise anhaftenden Verunreinigungen dient. Anschließend wird das Teil/Formteil getrocknet, insbesondere mit Druckluft trockengeblasen. Falls dabei stellenweise ein gelblich-weißer Niederschlag entstehen sollte, so handelt es sich dabei um lose am Teil/Formteil anhaftendes Silberiodid, welches es sich durch ein erneutes Abdampfen leicht entfernen läßt. Selbstverständlich ist es auch möglich, die mit dem Lösungsmittel, insbesondere Wasser gewaschenen Teile/Formteile zunächst mit Druckluft trockenzublasen. Ein sich dabei möglicherweise bildender Niederschlag (Silberiodid) platzt bei dieser Behandlung teilweise gleich wieder ab, so daß nur noch die gegebenenfalls verbliebenen Reste dieses Niederschlages anschließend ausgedampft werden können.

Wie bereits erwähnt, umfaßt die Erfindung neben dem erfindungsgemäßen Verfahren auch die Verwendung von Iod oder einer iodhaltigen Verbindung zum Entfernen silberhaltiger Leitmaterialien wie Leitlacken von galvanisch hergestellten Teilen, insbesondere von galvanisch hergestellten Formteilen für den Dentalbereich. Erfindungsgemäß werden das Iod bzw. die iodhaltige Verbindung erstmals für den entsprechenden Zweck zur Verfügung gestellt. Bezüglich der Ausgestaltung dieser erfindungsgemäßen Verwendung wird ausdrücklich auf die Beschreibung des erfindungsgemäßen Verfahrens verwiesen und Bezug genommen.

Schließlich umfaßt die Erfindung eine Lösung oder Dispersion selbst, die Iod und/oder mindestens eine iodhaltige Verbindung in mindestens einem polaren Lösungsmittel enthält. Bezüglich der Zusammensetzung und Eigenschaften solcher Lösungen wird nochmals ausdrücklich auf den Wortlaut der Ansprüche 18 bis 23 verwiesen und Bezug genommen sowie auf die Beschreibung des erfindungsgemäßen Verfahrens, die ebenfalls Merkmale der beanspruchten Lösung/Dispersion offenbart. Eine erfindungsgemäße Lösung, die neben Iod zusätzlich Kaliumiodid und/oder Polyvidon-Iod in Wasser und/oder Ethanol enthält, soll hier ausdrücklich hervorgehoben werden.

Bei der Erfindung hat sich überraschenderweise gezeigt, daß die Entfernung der Silberschicht nach dem erfindungsgemäßen Verfahren bei den bevorzugt im Dentalbereich galvanisierten Gold- und Goldlegierungsschichten durchgeführt werden kann, ohne daß sich für die Anforderungen, die an diese Schichten gestellt werden, negative Auswirkungen ergeben. Gerade bei Gold- und Goldlegierungsschichten war aufgrund der chemischen und physikalischen Verwandtschaft mit Silber unter Umständen mit einem Angriff der galvanisierten Metallschicht zu rechnen. Da die Leitsilberschicht manuell aufgetragen wird und damit unterschiedliche Schichtdicken aufweist, konnte befürchtet werden, daß selbst bei abgedeckter Außenseite des galvanisierten Metallteils zumindest doch die schneller vom Silber befreiten Stellen innen schon angegriffen werden, im Gegensatz zu Stellen mit dickeren Silberschichten. Um so überraschender war es, daß sogar bei nicht abgedeckten Gold - und Goldlegierungsschichten, lediglich ausnahmsweise und dann nur stellenweise eine leichte rötliche Verfärbung entsteht, die auf nicht festhaftende Ablagerungen von kolloidalem Gold zurückzuführen ist. Diese Ablagerungen lassen sich, falls sie überhaupt als störend empfunden werden, später beispielsweise leicht mit einem nicht abrasiv wirkenden Ziegenhaarbürstchen entfernen.

Die Vorteile der beschriebenen Erfindung liegen darüber hinaus darin, daß es sich bei der verwendeten Lösung um keinen Gefahrstoff handelt und damit der Erwerb und der Versand solcher Lösungen keinen gesonderten Vorschriften unterliegt. Auch der Einführung eines solchen Verfahrens in Exportländern sollte daher nichts im Wege stehen. Weiterhin gilt als großer Vorteil, daß die Durchführung des Verfahrens von Personen ohne besonderes chemisch-technisches Fachwissen erfolgen kann und viele Arbeitsschritte ohnehin aus dem alltäglichen Arbeitsleben der Dentalbranche bekannt sind. Ebenfalls hervorzuheben sind die kürzeren Durchführungszeiten und die stark verringerten Sicherheitsrisiken des Verfahrens im Gegensatz zum Umgang mit der bislang üblichen Salpetersäure-Behandlung. Das erfindungsgemäße Verfahren bietet auch wirtschaftliche Vorteile, da die verwendete Lösung je nach Zusammensetzung mehrfach verwendet werden kann und damit die Kosten geringer werden. So können z. B. mit einer Lösung der oben genannten Zusammensetzung bis zu 40 Galvanoformteile sicher vom Leitsilber befreit werden. Dies ist bei 100 ml verdünnter Salpetersäure nicht der Fall.

Zuletzt sei hier nochmals darauf hingewiesen, daß die wichtigste Anforderung an das Verfahren, nämlich die Unversehrtheit des galvanisch hergestellten Teils/Formteils im Hinblick auf Biokompatibilität, Ästhetik und Funktionalität absolut eingehalten wird und damit ein einfaches, schnelles und sicheres Verfahren zur Entfernung des Leitsilbers insbesondere aus galvanisch hergestellten prothetischen Formteile zur Verfügung gestellt wird.

Die beschriebenen und weitere Merkmale der Erfindung ergeben sich aus den nun folgenden Beispielen in Verbindung mit den Unteransprüchen. Dabei können die einzelnen Merkmale jeweils für sich allein oder in Kombination miteinander verwirklicht sein.

### Beispiele

### Beispiel 1:

### Lösung-1:

100 g Wasser
20 g PVP (M_{R}=10000)
2,2 g Iod
1 g Glycerin
1 g Zitronensäure
0,54 g KOH
0,5 g Na₂HPO₄

Ein galvanisch hergestelltes Goldformteil (99,99 %) mit Leitsilberlackschicht wird 30 Minuten im Ultraschallbad in der Lösung behandelt. Danach wird mit Wasser gründlich abgespült und mit dem Wasserdampfstrahler abgedampft. Nach dem Trockenblasen mit Druckluft ist kein gelblich/weißer Niederschlag entstanden. Das Silber ist restlos entfernt. Die Goldoberfläche weist bei genauster Betrachtung nur ganz vereinzelt minimal rötliche Stellen auf. Die Funktionalität des Formteils wurde nicht eingeschränkt.

### Beispiel 2:

### Lösung-2:

100 g Wasser
20 g PVP-Iod-Komplex

Ein galvanisch hergestelltes Goldformteil (99,9 %) mit Leitsilberlackschicht wird 60 Minuten im Ultraschallbad in der Lösung behandelt. Danach mit Wasser gründlich abgespült. Nach dem Trockenblasen mit Druckluft ist ein gelblich/weißer Niederschlag entstanden. Dieser wird mit dem Wasserdampfstrahler abgedampft. Danach wird das Formteil erneut mit Druckluft trocken geblasen. Das Silber ist restlos entfernt. Die Goldoberfläche weist bei genauester Betrachtung nur ganz vereinzelt minimal rötliche Stellen auf. Die Funktionalität des Formteils wurde nicht eingeschränkt.

### Beispiel 3:

### Lösung-3: (Angaben als Gewichtsteile)

2,5 TI. Iod
2,5 TI. Kaliumiodid
28,5 TI. Wasser
66,5 TI. Ethanol

Ein galvanisch hergestelltes Goldformteil (99,7 %) mit Leitsilberlackschicht wird 10 Minuten im Ultraschallbad in der Lösung behandelt, danach mit Wasser gründlich abgespült und mit dem Wasserdampfstrahler abgedampft. Nach dem Trockenblasen mit Druckluft ist kein gelblich/weißer Niederschlag entstanden. Das Silber ist restlos entfernt. Die Goldoberfläche ist überwiegend rötlich-braun. Die Funktionalität des Formteils wurde nicht eingeschränkt.

### Beispiel 4:

### Lösung-3 aus Beispiel 3

Ein galvanisch hergestelltes Goldformteil (99,7 %) mit Leitsilberlackschicht wird auf der Außenseite mit einem Abdecklack auf Silicon-Basis abgedeckt. Danach wird es 10 Minuten im Ultraschallbad in der Lösung behandelt. Nun wird es mit Wasser gründlich abgespült und die Abdecklackschicht abgezogen. Nachdem es nochmals mit Wasser abgespült wurde, wird es mit dem Wasserdampfstrahler abgedampft. Nach dem Trockenblasen mit Druckluft ist kein gelblich/weißer Niederschlag entstanden. Das Silber ist restlos entfernt. Die Goldoberfläche ist wie vor der Entfernung des Leitsilberlackes goldfarben und glänzend. Die Funktionalität des Formteils wurde nicht eingeschränkt.

### Beispiel 5:

### Lösung-5:

100 g Wasser
91 g Kaliumiodid
1,9 g Iod

Ein galvanisch hergestelltes Goldformteil (99,99 %) mit Leitsilberlackschicht wird auf der Außenseite mit Wachs abgedeckt. Danach wird es 6 min in der Lösung behandelt. Nun wird es mit Wasser gründlich abgespült und danach die Wachsschicht entfernt. Nachdem es nochmals mit Wasser abgespült wurde, wird es mit dem Wasserdampfstrahler abgedampft. Nach dem Trockenblasen mit Druckluft ist kein gelblich/weißer Niederschlag entstanden. Das Silber ist restlos entfernt. Die Goldoberfläche ist wie vor der Entfernung des Leitsilberlackes goldfarben und glänzend. Die Funktionalität des Formteils wurde nicht eingeschränkt.

### Beispiel 6:

### Lösung-5:

In der gleichen Lösung wie im Beispiel 5 werden 8 galvanisch hergestellte Formteile mit Leitsilberschicht 4 min im Ultraschallbad in der Lösung behandelt. Danach wird mit Wasser gründlich abgespült und mit dem Wasserdampfstrahler abgedampft. Nach dem Trockenblasen mit Druckluft ist kein gelblich/weißer Niederschlag entstanden. Das Silber ist restlos entfernt. Die Goldoberfläche ist stellenweise rötlich-braun. Die Funktionalität der Formteils wurde nicht eingeschränkt.

### Beispiel 7:

### Lösung 7:

100 g Wasser
45 g Kaliumiodid
0,2 g Iod

5 galvanisch hergestellte Goldformteile (99,9 %) mit Leitsilberlackschicht werden 5 min im Ultraschallbad in der Lösung behandelt. Danach werden sie mit Wasser gründlich abgespült und mit dem Wasserdampfstrahler abgedampft. Nach dem Trockenblasen mit Druckluft ist kein gelblich/weißer Niederschlag entstanden. Das Silber ist restlos entfernt. Die Goldoberfläche ist stellenweise leicht rötlich. Die Funktionalität des Formteils wurde nicht eingeschränkt.

## Patentansprüche

1. Verfahren zum Entfernen silberhaltiger Leitmaterialien wie Leitlacken von galvanisch hergestellten Teilen, insbesondere von galvanisch hergestellten Formteilen für den Dentalbereich, bei dem das Teil in mindestens einem Teilschritt des Verfahrens mit Iod und/ oder mit mindestens einer iodhaltigen Verbindung behandelt wird.

2. Verfahren nach Anspruch 1, **dadurch gekennzeichnet, daß** das Iod und/oder die iodhaltige Verbindung in Lösung oder in Dispersion mit mindestens einem Lösungsmittel vorliegen.

3. Verfahren nach Anspruch 2, **dadurch gekennzeichnet, daß** es sich bei dem Lösungsmittel um ein polares Lösungsmittel handelt.

4. Verfahren nach Anspruch 3, **dadurch gekennzeichnet, daß** es sich bei dem Lösungsmittel um Wasser oder um einen Alkohol, vorzugsweise um Ethanol, handelt.

5. Verfahren nach einem der vorhergehenden Ansprüche, **dadurch gekennzeichnet, daß** es sich bei der iodhaltigen Verbindung um ein Iodid, vorzugsweise um ein anorganisches Iodid, handelt.

6. Verfahren nach Anspruch 5, **dadurch gekennzeichnet, daß** es sich bei der iodhaltigen Verbindung um Natriumiodid oder vorzugsweise um Kaliumiodid handelt.

7. Verfahren nach einem der vorhergehenden Ansprüche, **dadurch gekennzeichnet, daß** es sich bei der iodhaltigen Verbindung um ein lodophor, vorzugsweise um Polyvidon-Iod, handelt.

8. Verfahren nach einem der Ansprüche 2 bis 7, **dadurch gekennzeichnet, daß** das galvanisch hergestellte Teil mit einer Lösung, die Iod und mindestens eine iodhaltige Verbindung enthält, behandelt wird.

9. Verfahren nach Anspruch 8, **dadurch gekennzeichnet, daß** es sich bei der iodhaltigen Verbindung um ein anorganisches Iodid, vorzugsweise Natriumiodid oder insbesondere um Kaliumiodid, handelt.

10. Verfahren nach Anspruch 8 oder Anspruch 9, **dadurch gekennzeichnet, daß** es sich bei der iodhaltigen Verbindung um Polyvidon-lod handelt.

11. Verfahren nach einem der Ansprüche 2 bis 10, **dadurch gekennzeichnet, daß** das galvanisch hergestellte Teil mit einer Lösung aus Iod und Kaliumiodid in Wasser und Ethanol behandelt wird.

12. Verfahren nach einem der Ansprüche 2 bis 11, **dadurch gekennzeichnet, daß** der Gehalt an Iod in der Lösung oder Dispersion zwischen 0,05 mg/l und der Sättigungskonzentration, vorzugsweise zwischen 0,5 g/l und 20 g/l, insbesondere zwischen 10 g/l und 20 g/l beträgt.

13. Verfahren nach einem der Ansprüche 2 bis 12, **dadurch gekennzeichnet, daß** der Gehalt der iodhaltigen Verbindung in der Lösung oder Dispersion zwischen 0,05 mg/l und der Sättigungskonzentration, vorzugsweise zwischen 10² g/l und 1,44 x 10³ g/l, insbesondere zwischen 5 x 10² g/l und 10³ g/l beträgt.

14. Verfahren nach einem der vorhergehenden Ansprüche, **dadurch gekennzeichnet, daß** die Behandlungsdauer zwischen 1 min und einigen Stunden beträgt, vorzugsweise zwischen 1 min und 1 h, insbesondere zwischen 1 min und 10 min.

15. Verfahren nach einem der vorhergehenden Ansprüche, **dadurch gekennzeichnet, daß** Bereiche des galvanisch hergestellten Teils, die kein silberhaltiges Leitmaterial aufweisen, vor Behandlung mit Iod und/oder mit mindestens einer iodhaltigen Verbindung geschützt werden, vorzugsweise durch Aufbringen einer Schutzschicht, insbesondere eines Schutzlacks.

16. Verwendung von Iod oder einer iodhaltigen Verbindung zum Entfernen silberhaltiger Leitmaterialien wie Leitlacken von galvanisch hergestellten Teilen, insbesondere von galvanisch hergestellten Formteilen für den Dentalbereich.

17. Lösung oder Dispersion von Iod und/oder mindestens einer iodhaltigen Verbindung in mindestens einem polaren Lösungsmittel.

18. Lösung oder Dispersion nach Anspruch 17, **dadurch gekennzeichnet, daß** es sich bei der iodhaltigen Verbindung um ein Iodid, vorzugsweise um ein anorganisches Iodid, insbesondere um Natriumiodid oder Kaliumiodid, handelt.

19. Lösung oder Dispersion nach Anspruch 17 oder Anspruch 18, **dadurch gekennzeichnet, daß** es sich bei der iodhaltigen Verbindung um ein lodophor, vorzugsweise um Polyvidon-Iod, handelt.

20. Lösung oder Dispersion nach einem der Ansprüche 17 bis 19, **dadurch gekennzeichnet, daß** es sich bei dem Lösungsmittel um Wasser oder um einen Alkohol, vorzugsweise Ethanol, handelt.

21. Lösung nach einem der Ansprüche 17 bis 20 mit folgenden Bestandteilen:
- lod,
- Kaliumiodid und/oder Polyvidon-Iod, und
- Wasser und/oder Ethanol.

22. Lösung oder Dispersion nach einem der Ansprüche 17 bis 21, insbesondere Lösung nach Anspruch 21, **dadurch gekennzeichnet, daß** der Gehalt an Iod zwischen 0,5 g/l und 20 g/l, vorzugsweise zwischen 10 g/l und 20 g/l, beträgt.

23. Lösung oder Dispersion nach einem der Ansprüche 17 bis 22, insbesondere Lösung nach Anspruch 21 oder Anspruch 22, **dadurch gekennzeichnet, daß** der Gehalt an iodhaltiger Verbindung zwischen 10² g/l und 1,44 x 10³ g/l, vorzugsweise zwischen 5 x 10² g/l und 10³ g/l, beträgt.
